# EUROPÄISCHE PATENTSCHRIFT

(11) **EP 3 157 140 B1**
(45) Veröffentlichungstag und Bekanntmachung des Hinweises auf die Patenterteilung: **06.12.2017**
(21) Anmeldenummer: 15002941.1
(22) Anmeldetag: 15.10.2015
(51) Int. Cl.: H02K 1/27

(54) **DREHMOMENTOPTIMIERTER ROTOR UND ELEKTROKLEINMOTOR MIT EINEM DERARTIGEN ROTOR**
TORQUE OPTIMIZED ROTOR AND SMALL ELECTRIC MOTOR COMPRISING SUCH A ROTOR
ROTOR A COUPLE OPTIMISE ET PETIT MOTEUR ELECTRIQUE DOTE D'UN TEL ROTOR

(43) Veröffentlichungstag der Anmeldung: 19.04.2017
(73) Patentinhaber: Lakeview Innovation Ltd., 6374 Buochs (CH)
(72) Erfinder: Imfeld, Stefan, CH-6074 Giswil (CH); Wagner, Heinz, CH-6064 Kerns (CH)
(74) Vertreter: Grünecker Patent- und Rechtsanwälte PartG mbB

(56) Entgegenhaltungen:
- EP-A2- 2 568 575
- EP-A2- 2 696 470
- DE-A1-102013 211 858

## Beschreibung

Die vorliegende Erfindung betrifft einen Rotor für einen Elektromotor nach dem Oberbegriff des unabhängigen Anspruchs 1.

Ein Rotor der gattungsgemäßen Art weist eine Rotorachse, mehrere speichenförmig angeordnete Permanentmagneten sowie mehrere Rückschlusskerne auf. Die im Folgenden verwendeten Angaben "axial" und "radial" beziehen sich, soweit nicht anders angegeben, auf den Rotor bzw. dessen Rotorachse. Jeder der Permanentmagneten weist zwei axiale Enden, zwei Längsseiten, eine radiale Außenseite sowie eine radiale Innenseite auf. Zwischen zwei benachbarten Permanentmagneten ist jeweils einer der Rückschlusskerne angeordnet. Die Rückschlusskerne weisen die Form eines Keils auf. Der Keil hat eine radial verlaufende Symmetrieebene, zwei Flanken, zwei axiale Enden und eine radiale Außenseite. Die beiden Flanken schließen zueinander einen Keilwinkel A ein. Die Rückschlusskerne reichen in radialer Richtung etwas weiter nach außen. Sie stehen daher in Bezug auf die Rotorachse radial über die Permanentmagneten hinaus. Der Rotor ist zumindest teilweise von einer sogenannten Gussform umgeben. Hierbei kann es sich beispielsweise um eine Kunststoffumspritzung handeln. Die Gussform weist mehrere in axialer Richtung verlaufende Streben auf, welche die Permanentmagneten radial überdecken. Ferner besteht bei dem gattungsgemäßen Rotor zwischen den Streben und den Rückschlusskernen ein in radialer Richtung wirkender Formschluss. Die Rückschlusskerne übergreifen die Permanentmagneten an deren radialen Außenseiten nicht.

Aus EP 2827474 A2 ist ein Rotor bekannt, dessen prinzipieller Aufbau mit dem Aufbau des gattungsgemäßen Rotors übereinstimmt. Der dort beschriebene Rotor unterscheidet sich von dem Gegenstand des Oberbegriffs des unabhängigen Anspruchs 1 jedoch dadurch, dass die Rückschlusskerne die Permanentmagneten an deren radialen Außenseiten übergreifen. Die Rückschlusskerne stehen speichenförmig von einer zentralen hülsenförmigen Struktur ab, welche die Rückschlusskerne am Innenumfang miteinander verbindet. Die Rückschlusskerne bestehen aus einem in axialer Richtung aufgeschichteten Blechpaket. Die zusammenhängende Ausführung der Rückschlusskerne hat den Vorteil, dass die Rückschlusskerne nicht exakt zueinander positioniert werden müssen, da die relative Positionierung der einzelnen Kerne zueinander bereits festgelegt ist. Zudem ist auch die Herstellung des Blechpakets relativ einfach und kostengünstig. Die innere hülsenförmige Struktur des Blechpakets wird durch aufeinandergeschichtete Ringe der einzelnen Bleche gebildet. Sie erfordert zusätzlichen Bauraum in radialer Richtung, weshalb sich die zusammenhängende Ausführung der Rückschlusskerne bei besonders kleinen Elektromotoren weniger eignet, insbesondere wenn eine besonders kompakte Bauweise erwünscht ist. Viel gravierender ist jedoch, dass durch die Verbindung der Rückschlusskerne am Innenumfang des Rotors ein magnetischer Kurzschluss entsteht, der bewirkt, dass nicht der komplette magnetische Fluss in den Luftspalt zum Stator hin induziert wird.

Bei dem in EP 2827474 A2 gezeigten Rotor stehen die Rückschlusskerne in radialer Richtung etwas über die Permanentmagneten hinaus, sodass sich am Außenumfang des Rotors zwischen den Rückschlusskernen jeweils eine axial verlaufende Nut-förmige Vertiefung ergibt. Die axial verlaufenden Vertiefungen sind durch die Streben einer Kunststoffumspritzung ausgefüllt, sodass sich ein homogener zylindrischer Außenumfang des Rotors ergibt. Die radialen Außenseiten der Rückschlusskerne liegen frei, um einen möglichst geringen radialen Abstand zwischen den Rückschlusskernen und den Polen des Stators zu gewährleisten. Die Permanentmagneten werden in radialer Richtung zum einen durch die Streben der Kunststoffumspritzung gehalten. Die vorrangige Sicherung gegen ein Herausfallen aus dem Rotorverbund aufgrund der beim Betrieb des Elektromotors auf den Rotor wirkenden Fliehkräfte wird jedoch dadurch erzielt, dass die Rückschlusskerne die Permanentmagneten an deren radialen Außenseiten übergreifen. Zu diesem Zweck ist am radial äußeren Ende der Flanken der Rückschlusskerne jeweils eine in Umfangsrichtung abstehende Rippe ausgebildet, die den benachbarten Permanentmagnet an dessen radialer Außenseite ein Stück weit überdeckt.

Ein weiterer Rotor ist aus EP 2568578 A2 bekannt. Dieses Dokument zeigt ein Ausführungsbeispiel, bei dem die Rückschlusskerne nicht über eine gemeinsame, hülsenförmige Struktur am Innenumfang miteinander verbunden sind. Jedoch ist auch hier eine Hülse am Innenumfang des Rotors vorgesehen, über die eine Verbindung zur Rotorwelle hergestellt wird. Die Rückschlusskerne werden bei diesem Ausführungsbeispiel ferner durch Schrauben gesichert, die in axialer Richtung durch die Rückschlusskerne hindurchgeführt sind. Diese Art der Befestigung eignet sich nur für Rotoren mit größerem Durchmesser. Ähnlich wie bei dem aus EP 2827474 A2 bekannten Rotor werden die Permanentmagneten in radialer Richtung vorrangig dadurch gesichert, dass die Rückschlusskerne die Permanentmagneten an deren radialen Außenseiten übergreifen.

Die zuvor beschriebenen aus dem Stand der Technik bekannten Rotorausführungen gewährleisten zwar einen sicheren Zusammenhalt des Rotors. Die konkrete technische Ausführung benötigt jedoch in beiden Fällen relativ viel Platz in radialer Richtung und ist für die Rotoren von Elektrokleinmotoren weniger geeignet. Davon abgesehen existiert ein Bedarf an drehmomentoptimierten Elektrokleinmotoren. Bei Einsatz der zuvor beschriebenen aus dem Stand der Technik bekannten Rotoren treten Verluste auf, die nicht zu einem optimalen Drehmoment führen.

Ein Rotor gemäß dem Oberbegriff des unabhängigen Anspruchs 1 ist beispielsweise aus EP 2696470 A2 bekannt.

Aufgabe der vorliegenden Erfindung ist es, einen Rotor der gattungsgemäßen Art anzugeben, der sich für einen Elektrokleinmotor eignet, eine dafür ausreichende Stabilität aufweist und zudem eine Optimierung des Drehmoments gewährleistet.

Die Aufgabe wird gelöst durch die Merkmale des unabhängigen Anspruchs 1. Demnach liegt bei einem Rotor der gattungsgemäßen Art dann eine erfindungsgemäße Lösung der Aufgabe vor, wenn es sich bei den Rückschlusskernen um einzelne, nicht zusammenhängende Rückschlusskerne handelt, wobei sowohl die Permanentmagneten als auch die Rückschlusskerne in radialer Richtung vorrangig direkt durch die Gussform zusammengehalten werden, wobei für den Formschluss zwischen den Streben und den Rückschlusskernen in den Flanken der Rückschlusskerne jeweils eine axial verlaufende Nut vorgesehen ist, wobei die Nut eine näher zur radialen Außenseite des Rückschlusskerns gelegene erste Nutflanke sowie eine entfernter zur radialen Außenseite des Rückschlusskerns gelegene zweite Nutflanke aufweist.

Es hat sich herausgestellt, dass ein stabiler Zusammenhalt des Rotors bei Rotoren mit geringem Durchmesser allein durch die Kunststoffumspritzung bzw. Gussform sichergestellt werden kann. Die Rückschlusskerne werden dabei in radialer Richtung durch den zwischen den Streben der Gussform und den Rückschlusskernen bestehenden Formschluss gehalten. Eine Verschraubung der Rückschlusskerne durch axial durch die Rückschlusskerne hindurch verlaufende Schrauben ist nicht erforderlich. Ebenso wenig bedarf es einer inneren hülsenförmigen Struktur, über welche die Rückschlusskerne am Innenumfang miteinander verbunden sind. Dadurch werden Verluste vermieden, die durch magnetischen Kurzschluss am Innenumfang entstehen. Das Drehmoment wird weiter dadurch optimiert, dass die Rückschlusskerne die Permanentmagneten an deren radialen Außenseiten nicht übergreifen. Die Streben der Gussform schließen vorzugsweise bündig mit den radialen Außenseiten der Rückschlusskerne ab, sodass sich ein homogener zylindrischer Außenumfang des Rotors ergibt. Jedenfalls sind die radialen Außenseiten der Rückschlusskerne vorzugsweise nicht von der Gussform umgeben. Sie liegen vorzugsweise frei, um einen optimalen Wirkungsgrad bzw. ein hohes Drehmoment zu erreichen. Damit die Gussform einen stabilen Zusammenhalt des Rotors gewährleisten kann, sind die Streben der Gussform zumindest an einem axialen Ende des Rotors, vorzugsweise an beiden axialen Enden des Rotors miteinander verbunden. Die Verbindung besteht vorzugsweise in einem durchgehenden Ring. Durch die erfindungsgemäß vorgesehene Nut in den Flanken der Rückschlusskerne wird auf einfache Weise ein geeigneter Formschluss zwischen den Rückschlusskernen und der Gussform hergestellt. Bei der Nut kann es sich vorteilhafter Weise um eine einfache V-förmige Nut mit weiter vorzugsweise abgerundetem Nutgrund handeln.

Vorteilhafte Ausführungsformen der vorliegenden Erfindung sind Gegenstand der Unteransprüche.

Besonders bevorzugt schließt die erste Nutflanke zur Symmetrieebene des Rückschlusskerns einen Winkel B ein, welcher größer ist als die Hälfte des Keilwinkels A und maximal dem Keilwinkel A entspricht. Insbesondere wenn die Gussform durch eine Kunststoffumspritzung realisiert wird, wird durch diese Ausführungsform sichergestellt, dass der Kunststoff in die Nut fließt und diese dabei vollständig ausfüllt. Der Keilwinkel A ergibt sich durch 360° geteilt durch die Anzahl der Permanentmagneten, falls diese einen rechteckigen Querschnitt aufweisen. Ganz besonders bevorzugt ist der Winkel B um mindestens 4° größer als die Hälfte des Keilwinkels A. Bei 10 Permanentmagneten beträgt der Keilwinkel A somit 36°, und der Winkel B liegt bevorzugt im Bereich zwischen 22° und 36°. Bei 16 Magnetpolen beträgt der Keilwinkel A 22,5° und der Winkel B liegt dabei bevorzugt im Bereich zwischen 15,25° und 22,5°.

In einer weiteren bevorzugten Ausführungsform der vorliegenden Erfindung liegt die Nut nahe der axialen Außenseite des entsprechenden Rückschlusskerns. Besonders bevorzugt befindet sich die Nut etwa auf radialer Position der radialen Außenseite des angrenzenden Permanentmagneten. Dadurch wird zum einen ein stabiler Zusammenhalt gewährleistet, zum anderen wird sichergestellt, dass der Kunststoff der Kunststoffumspritzung schnell und vollständig in die Nut fließen kann.

In einer weiteren bevorzugten Ausführungsform der vorliegenden Erfindung geht die erste Nutflanke nahtlos in eine Abrundung zwischen entsprechender Flanke und axialer Außenseite des Rückschlusskerns über. Auch hierdurch wird das Fließverhalten des Kunststoffs optimiert. Weiter bevorzugt sind sämtliche in einem Schnitt senkrecht zur Rotorachse erkennbaren Konturen des Rückschlusskerns abgerundet, um sicherzustellen, dass die Gussform optimal an der Kontur anliegt.

In einer weiteren bevorzugten Ausführungsform der vorliegenden Erfindung ist die Kontur der Flanken des Rückschlusskerns zwischen erster Nutflanke und radialer Außenseite des Rückschlusskerns maximal in etwa so weit von der Symmetrieebene entfernt wie unmittelbar im Anschluss an die zweite Nutflanke. Hierdurch werden die Herstellung der Gussform vereinfacht und der Zusammenhalt des Rotors weiter optimiert.

In einer weiteren bevorzugten Ausführungsform der vorliegenden Erfindung stützt die Gussform die Permanentmagneten und die Rückschlusskerne auch radial nach innen ab, wobei ein innerer Teil der Gussform zumindest an einem axialen Ende des Rotors mit einem äußeren Teil der Gussform verbunden ist. Besonders bevorzugt besteht die Verbindung zwischen dem inneren Teil der Gussform und dem äußeren Teil der Gussform an beiden axialen Enden. Weiter vorzugsweise handelt es sich bei der Gussform um eine Kunststoffumspritzung.

In einer weiteren Ausführungsform der vorliegenden Erfindung sind die Flanken der Rückschlusskerne zusätzlich mit der jeweils daran angrenzenden Längsseite der benachbarten Permanentmagneten verklebt. Diese Ausführungsform bietet sich insbesondere bei etwas größeren Rotoren von Elektrokleinmotoren an, um den stabilen Zusammenhalt des Rotors zu gewährleisten.

Bevorzugt sind die Rückschlusskerne weichmagnetische Blechpakete aus mehreren aufeinandergestapelten Blechsegmenten. Die Blechsegmente sind dabei senkrecht zur Rotorachse ausgerichtet. Weiter vorzugsweise sind die Blechsegmente aus einem Blech ausgestanzt. Sie sind vorzugsweise beidseitig isoliert und weiter vorzugsweise mechanisch miteinander verbunden, laserverschweißt oder miteinander verklebt.

In einer weiteren bevorzugten Ausführungsform der vorliegenden Erfindung handelt es sich bei den Permanentmagneten um Neodym-Eisen-Bor-Magnete. Die Permanentmagneten sind weiter vorzugsweise senkrecht zur radialen Richtung des Rotors magnetisiert.

Die Erfindung stellt ferner einen Elektrokleinmotor mit einem Stator und mit einem erfindungsgemäßen Rotor bereit. Vorzugsweise weist der Elektrokleinmotor einen Durchmesser von maximal 45 mm, weiter vorzugsweise von maximal 22 mm auf.

In einer bevorzugten Ausführungsform weist der Rotor entweder 10 oder 14 oder 16 Rotorpole auf, wobei der Stator über 12 Statorzähne verfügt.

Ein Ausführungsbeispiel der vorliegenden Erfindung wird im Folgenden anhand von Zeichnungen näher erläutert.

Es zeigen:
- Figur 1: ein Ausführungsbeispiel eines erfindungsgemäßen Rotors in Schrägansicht,
- Figur 2: einen Querschnitt des erfindungsgemäßen Rotors aus Figur 1, und
- Figur 3: eine Detailansicht des Querschnitts aus Figur 2.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

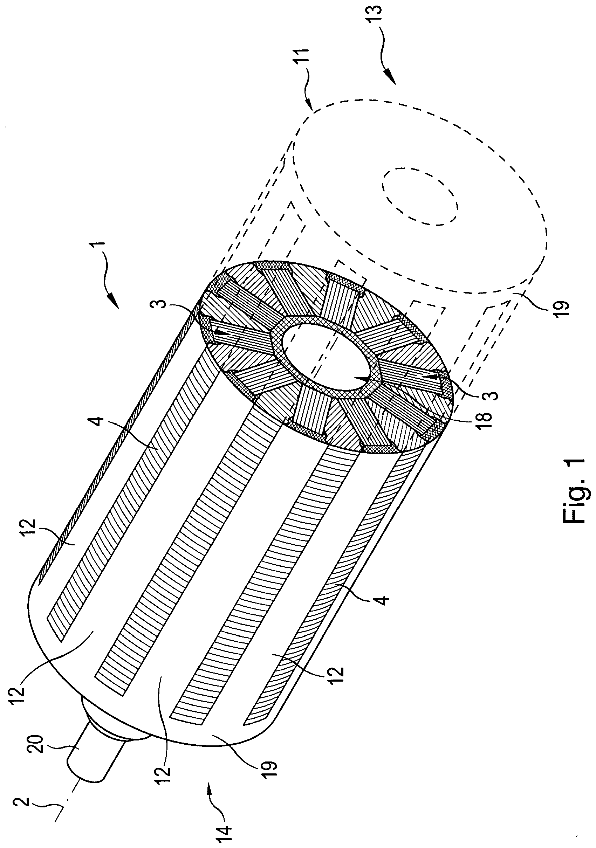

Figur 1 zeigt einen erfindungsgemäßen Rotor 1 in Schrägansicht. Der Rotor 1 weist eine Rotorachse 2, mehrere speichenförmig angeordnete Permanentmagneten 3 sowie mehrere dazwischen angeordnete Rückschlusskerne 4 auf. Die aus den Permanentmagneten 3 und den Rückschlusskernen 4 bestehende Rotorbaugruppe ist hohlzylindrisch ausgeführt und sitzt auf einer durchgehenden Welle 20.

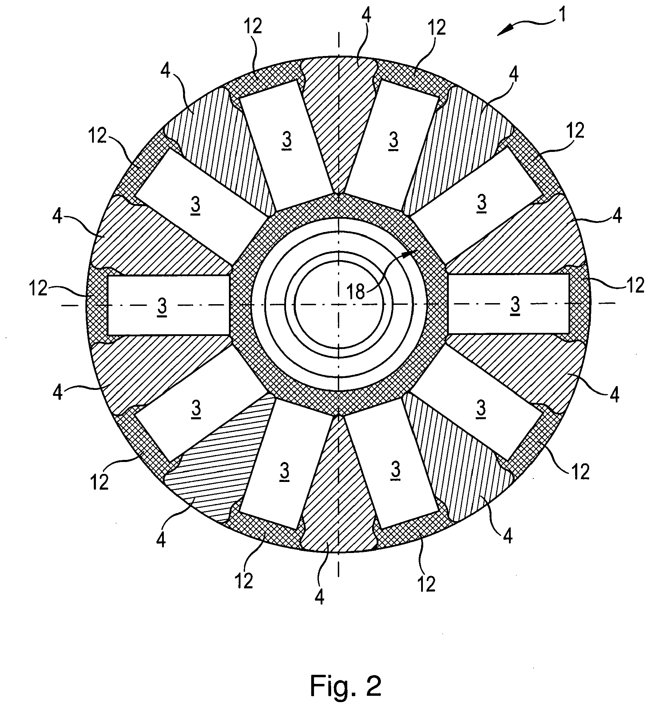

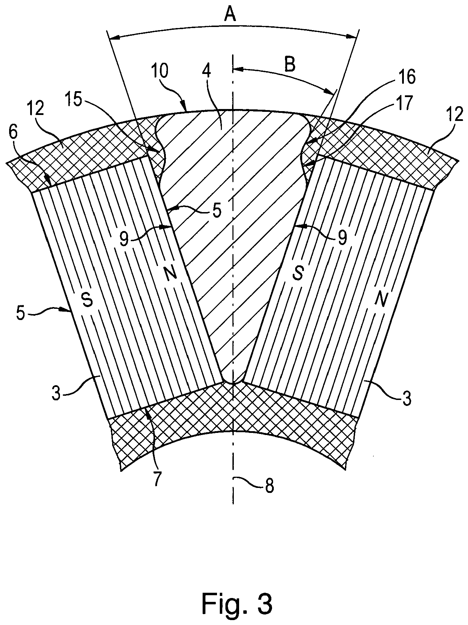

Wie insbesondere der Querschnitt in Figur 2 zeigt, ist der Rotor 10-polig ausgeführt. Er umfasst daher insgesamt 10 Permanentmagneten 3, die gleichmäßig über den Umfang verteilt angeordnet sind. Die Permanentmagneten 3 weisen einen rechteckigen Querschnitt auf. Sie verfügen über die in Figur 3 mit dem Bezugszeichen 5 bezeichneten, parallel zueinander ausgerichteten Längsseiten, eine senkrecht dazu ausgerichtete radiale Außenseite 6 sowie eine ebenfalls senkrecht dazu ausgerichtete radiale Innenseite 7. Bei den Permanentmagneten handelt es sich vorzugsweise um Neodym-Eisen-Bor-Magnete. Sie sind senkrecht zur radialen Richtung des Rotors magnetisiert.

Zwischen zwei benachbarten Permanentmagneten 3 ist jeweils ein dazwischenliegender Rückschlusskern 4 in Form eines Keils angeordnet. In Figur 3 ist gezeigt, dass der Keil eine radial verlaufende Symmetrieebene 8, zwei in Bezug auf die Symmetrieebene 8 spiegelbildlich angeordnete Flanken 9 sowie eine radiale Außenseite 10 aufweist. Die beiden Flanken 9 schließen zueinander den Keilwinkel A ein. Dieser berechnet sich zu 360° geteilt durch die Anzahl der Permanentmagneten. Beim gezeigten Ausführungsbeispiel beträgt der Keilwinkel A somit 36°.

Bei den Rückschlusskernen handelt es sich um weichmagnetische Blechpakete aus mehreren aufeinandergestapelten Blechsegmenten. Die Blechsegmente sind aus einem beidseitig isolierten Blech ausgestanzt und vorzugsweise mechanisch miteinander verbunden, laserverschweißt oder miteinander verklebt. Die einzelnen Blechsegmente sind senkrecht zur Rotorachse 2 ausgerichtet.

Wie in den Abbildungen gezeigt ist, stehen die Rückschlusskerne 4 radial etwas über die Permanentmagneten 3 hinaus. Die sich dadurch ergebenden Zwischenräume zwischen den Rückschlusskernen 4 sind mit Kunststoff ausgefüllt. Genauer gesagt wird die Rotorbaugruppe von einer Kunststoffumspritzung 11 zusammengehalten, welche die Permanentmagneten 3 und die Rückschlusskerne 4 sowohl am Außenumfang als auch am Innenumfang des Rotors umgibt. Die Kunststoffumspritzung weist am Außenumfang mehrere in axialer Richtung verlaufende Streben 12 auf, wobei jede dieser Streben jeweils einen der Permanentmagneten 3 radial abdeckt und somit den Zwischenraum zwischen zwei benachbarten Rückschlusskernen 4 füllt. Die Streben 12 schließen bündig mit den radialen Außenseiten 10 der Rückschlusskerne 4 ab, sodass sich ein homogener zylindrischer Außenumfang des Rotors ergibt. Die radialen Außenseiten 10 der Rückschlusskerne 4 sind somit nicht von der Kunststoffumspritzung abgedeckt. Die Streben 12 der Kunststoffumspritzung 11 sind sowohl am vorderen axialen Ende 13 als auch am hinteren axialen Ende 14 des Rotors jeweils über einen Ring 19 der Kunststoffumspritzung miteinander verbunden. Die beiden Ringe 19 stellen auch eine Verbindung zu dem inneren Teil 18 der Kunststoffumspritzung her. Dieser innere Teil 18 der Kunststoffumspritzung weist im wesentlichen die Form einer hohlzylindrischen Hülse auf, welche die Permanentmagneten 3 und die Rückschlusskerne 4 radial abstützt.

Die Permanentmagneten 3 werden durch die sie direkt überdeckenden Streben 12 der Kunststoffumspritzung gehalten. Die Streben 12 verhindern somit, dass die Permanentmagneten 3 aufgrund der beim Betrieb des Elektromotors entstehenden und auf den Rotor wirkenden Fliehkräfte nach außen wandern und den Rotor dadurch verformen. Die Streben 12 übernehmen diese Aufgabe auch für die Rückschlusskerne 4. Zu diesem Zweck besteht zwischen den Streben 12 und den Rückschlusskernen 4 ein in radialer Richtung wirkender Formschluss. Dieser wird realisiert durch eine in den Flanken 9 der Rückschlusskerne 4 vorgesehene Nut 15. Diese befindet sich nahe der axialen Außenseite des Rückschlusskerns, verläuft in axialer Richtung und weist eine näher zur radialen Außenseite des Rückschlusskerns gelegene erste Nutflanke 16 sowie eine entfernter zur radialen Außenseite des Rückschlusskerns gelegene zweite Nutflanke 17 auf.

Die erste Nutflanke schließt zur Symmetrieebene des Rückschlusskerns einen Winkel B ein, der erfindungsgemäß größer ist als die Hälfte des Keilwinkels A und maximal dem Keilwinkel A entspricht. Ganz besonders bevorzugt ist der Winkel B um mindestens 4° größer als die Hälfte des Keilwinkels A. Bei dem gezeigten Ausführungsbeispiel liegt der Winkel B somit vorzugsweise in einem Bereich zwischen 22° und 36°. Dadurch wird sichergestellt, dass der Kunststoff der Kunststoffumspritzung zügig und vollständig in die Nut 15 fließt und somit ein optimaler Formschluss zwischen den späteren Streben 12 der Kunststoffumspritzung und den Rückschlusskernen 4 gewährleistet ist.

Den sicheren Zusammenhalt der Rotorbaugruppe und eine einfache Prozessführung stellt unter anderem auch die Positionierung der Nut 15 sicher. Diese befindet sich vorzugsweise etwa auf radialer Position der radialen Außenseite 6 des jeweils angrenzenden Permanentmagneten 3. Um das Einfließen des Kunststoffs in die Nut weiter zu begünstigen, sind die Konturen zumindest im Bereich der Nut abgerundet. Die erste Nutflanke 16 geht daher nahtlos in eine Abrundung zwischen entsprechender Flanke 9 und axialer Außenseite 10 des Rückschlusskerns 4 über. Ebenso ist auch der Nutgrund der Nut 15 abgerundet. Um den sicheren Zusammenhalt der Rotorbaugruppe weiter zu optimieren, ist die Kontur der Flanken des Rückschlusskerns im Bereich zwischen erster Nutflanke 16 und radialer Außenseite 10 des Rückschlusskerns 4 maximal in etwa so weit von der Symmetrieebene 8 entfernt wie unmittelbar im Anschluss an die zweite Nutflanke 17.

Um den Zusammenhalt weiter zu stärken, können die Flanken 9 der Rückschlusskerne 4 mit der jeweils daran angrenzenden Längsseite 5 der benachbarten Permanentmagneten 3 verklebt sein. Die zusätzliche Verklebung bietet sich insbesondere dann an, wenn der Durchmesser des Rotors etwas größer ist. Generell eignet sich die Erfindung bei Rotoren für Elektrokleinmotoren mit einem Durchmesser von maximal 45 mm. Ohne zusätzliche Verklebung kommt man in der Regel aus, wenn der Elektrokleinmotor einen Durchmesser von maximal 22 mm aufweist.

## Patentansprüche

1. Rotor (1) für einen Elektromotor,
wobei der Rotor (1) eine Rotorachse (2), mehrere speichenförmig angeordnete Permanentmagneten (3) sowie mehrere Rückschlusskerne (4) aufweist,
wobei jeder Permanentmagnet (3) zwei axiale Enden, zwei Längsseiten (5), eine radiale Außenseite (6) sowie eine radiale Innenseite (7) aufweist,
wobei zwischen zwei benachbarten Permanentmagneten (3) jeweils ein dazwischenliegender Rückschlusskern (4) in Form eines Keils angeordnet ist, wobei der Keil eine radial verlaufende Symmetrieebene (8), zwei Flanken (9), zwei axiale Enden und eine radiale Außenseite (10) aufweist, wobei die beiden Flanken (9) zueinander einen Keilwinkel A einschließen,
wobei die Rückschlusskerne (4) in Bezug auf die Rotorachse (2) radial über die Permanentmagneten (3) hinausstehen,
wobei der Rotor (1) zumindest teilweise von einer Gussform (11) umgeben ist, wobei die Gussform (11) mehrere in axialer Richtung verlaufende Streben (12) aufweist, welche die Permanentmagneten (3) radial überdecken,
wobei zwischen den Streben (12) und den Rückschlusskernen (4) ein in radialer Richtung wirkender Formschluss besteht,
und wobei die Rückschlusskerne (4) die Permanentmagneten (3) an deren radialen Außenseiten (6) nicht übergreifen,
**dadurch gekennzeichnet, dass** es sich bei den Rückschlusskernen (4) um einzelne, nicht zusammenhängende Rückschlusskerne (4) handelt, wobei sowohl die Permanentmagneten (3) als auch die Rückschlusskerne (4) in radialer Richtung vorrangig direkt durch die Gussform (11) zusammengehalten werden, wobei für den Formschluss zwischen den Streben (12) und den Rückschlusskernen (4) in den Flanken (9) der Rückschlusskerne (4) jeweils eine axial verlaufende Nut (15) vorgesehen ist, wobei die Nut (15) eine näher zur radialen Außenseite (10) des Rückschlusskerns (4) gelegene erste Nutflanke (16) sowie eine entfernter zur radialen Außenseite (10) des Rückschlusskerns (4) gelegene zweite Nutflanke (17) aufweist.

2. Rotor (1) nach Anspruch 1, **dadurch gekennzeichnet, dass** die erste Nutflanke (16) zur Symmetrieebene (8) des Rückschlusskerns (4) einen Winkel B einschließt, welcher größer ist als die Hälfte des Keilwinkels A und maximal dem Keilwinkel A entspricht.

3. Rotor (1) nach Anspruch 2, **dadurch gekennzeichnet, dass** der Winkel B um mindestens 4° größer ist als die Hälfte des Keilwinkels A.

4. Rotor (1) nach einem der Ansprüche 1 bis 3, **dadurch gekennzeichnet, dass** sich die Nut (15) etwa auf radialer Position der radialen Außenseite (6) der Permanentmagneten (3) befindet.

5. Rotor (1) nach einem der Ansprüche 1 bis 4, **dadurch gekennzeichnet, dass** die erste Nutflanke (16) nahtlos in eine Abrundung zwischen entsprechender Flanke (9) und axialer Außenseite (10) des Rückschlusskerns (4) übergeht.

6. Rotor (1) nach einem der Ansprüche 1 bis 5, **dadurch gekennzeichnet, dass** die Kontur der Flanken (9) des Rückschlusskerns (4) zwischen erster Nutflanke (16) und radialer Außenseite (10) des Rückschlusskerns (4) maximal in etwa so weit von der Symmetrieebene (8) entfernt ist wie unmittelbar im Anschluss an die zweite Nutflanke (17).

7. Rotor (1) nach einem der Ansprüche 1 bis 6, **dadurch gekennzeichnet, dass** die Gussform (11) die Permanentmagneten (3) und die Rückschlusskerne (4) auch radial nach innen abstützt, wobei ein innerer Teil (18) der Gussform (11) zumindest an einem axialen Ende (13, 14) des Rotors (1) mit einem äußeren Teil der Gussform (11) verbunden ist.

8. Rotor (1) nach einem der Ansprüche 1 bis 7, **dadurch gekennzeichnet, dass** die Flanken (9) der Rückschlusskerne (4) mit der jeweils daran angrenzenden Längsseite (5) der benachbarten Permanentmagneten (3) verklebt sind.

9. Rotor (1) nach einem der vorstehenden Ansprüche, **dadurch gekennzeichnet, dass** die Rückschlusskerne (4) weichmagnetische Blechpakete aus mehreren aufeinandergestapelten Blechsegmenten sind.

10. Rotor (1) nach Anspruch 9, **dadurch gekennzeichnet, dass** die Blechsegmente aus einem Blech ausgestanzt sind.

11. Rotor (1) nach Anspruch 9 oder 10, **dadurch gekennzeichnet, dass** die Blechsegmente beidseitig isoliert und vorzugsweise mechanisch miteinander verbunden, laserverschweißt oder miteinander verklebt sind.

12. Rotor (1) nach einem der vorstehenden Ansprüche, **dadurch gekennzeichnet, dass** die Permanentmagnete (3) Neodym-Eisen-Bor-Magnete sind.

13. Elektrokleinmotor mit einem Stator und mit einem Rotor (1) nach einem der vorstehenden Ansprüche, wobei der Elektrokleinmotor vorzugsweise einen Durchmesser von maximal 45 mm, weiter vorzugsweise von maximal 22 mm aufweist.

14. Elektromotor nach Anspruch 13, **dadurch gekennzeichnet, dass** der Rotor (1) 10, 14, oder 16 Rotorpole aufweist, wobei der Stator 12 Statorzähne aufweist.

## Claims

1. Rotor (1) for an electric engine,
wherein the rotor (1) has a rotor axis (2), multiple permanent magnets (3) that are arranged in a spoke-shaped way as well as multiple inference cores (4),
wherein each permanent magnet (3) has two axial ends, two longitudinal sides (5) one radial outer side (6) as well as a radial inner side (7),
wherein respectively one interstitial inference core (4) in form of a wedge is disposed between two adjacent permanent magnets (3), wherein the wedge has a radially extending plane of symmetry (8), two flanks (9), two axial ends and a radial outer side (10), wherein the two flanks (9) confine a wedge angle A towards one another,
wherein the inference cores (4) protrude radially over the permanent magnets (3) in relation to the rotor axis (2),
wherein the rotor (1) is enclosed at least partially by a casting mold (11), wherein the casting mold (11) has multiple struts (12) that extend in an axial direction and that overlap radially with the permanent magnets (3),
wherein a form closure that acts in a radial direction exists between the struts (12) and the inference cores (4),
and wherein the inference cores (4) do not overlap with the permanent magnets (3) on their radial outer sides (6),
**characterized in that** the inference cores (4) are individual inference cores (4) that are not connected, wherein both the permanent magnets (3) as well as the inference cores (4) are held together primarily directly by the casting mold (11) in a radial direction, wherein respectively one axially extending groove (15) is provided for the form closure between the struts (12) and the inference cores (4) in the flanks (9) of the inference cores (4), wherein the groove (15) has a first groove flank (16), which is located in closer proximity to the radial outer side (10) of the inference core (4), as well as a second groove flank (17) that is located further away from the radial outer side (10) of the inference core (4).

2. Rotor (1) according to Claim 1, **characterized in that** the first groove flank (16) confines an angle B towards the plane of symmetry (8) of the inference core (4), which is greater than half of the wedge angle A and which is equivalent to the wedge angle A as a maximum.

3. Rotor (1) according to Claim 2, **characterized in that** the angle B is at least 4° greater than half of the wedge angle A.

4. Rotor (1) according to one of the Claims 1 to 3, **characterized in that** the groove (15) is located approximately on a radial position of the radial outer side (6) of the permanent magnets (3).

5. Rotor (1) according to one of the Claims 1 to 4, **characterized in that** the first groove flank (16) merges seamlessly into a rounding between the respective flank (9) and the axial outer side (10) of the inference core (4).

6. Rotor (1) according to one of the Claims 1 to 5, **characterized in that** the contour of the flanks (9) of the inference core (4) is located approximately as far away from the plane of symmetry (8) as directly following the second groove flank (17) as a maximum.

7. Rotor (1) according to one of the Claims 1 to 6, **characterized in that** the casting mold (11) also supports the permanent magnets (3) and the inference cores (4) radially towards the inside, wherein an inner part (18) of the casting mold (11) is connected to an outer part of the casting mold (11) at least on one axial end (13, 14) of the rotor (1).

8. Rotor (1) according to one of the Claims 1 to 7, **characterized in that** the flanks (9) of the inference cores (4) are glued to the respective adjacent longitudinal side (5) of the neighboring permanent magnets (3).

9. Rotor (1) according to one of the preceding claims, **characterized in that** the inference cores (4) are magnetically soft bundles of laminations made up of multiple stacked up metal sheet segments.

10. Rotor (1) according to Claim 9, **characterized in that** metal sheet segments are punched out of a metal sheet.

11. Rotor (1) according to Claim 9 or 10, **characterized in that** the metal sheet segments are insulated on both sides and preferably connected to one another mechanically, welded by laser or glued to one another.

12. Rotor (1) according to one of the preceding claims, **characterized in that** the permanent magnets (3) are neodymium-iron-boron magnets.

13. Small electric engine with a stator and a rotor (1) according to one of the preceding claims, wherein the small electric engine preferably has a maximum diameter of 45mm, further preferably of 22mm as a maximum.

14. Electric engine according to Claim 13, **characterized in that** the rotor (1) has 10, 14 or 16 rotor poles whereas the stator has 12 stator teeth.

## Revendications

1. Rotor (1) pour un moteur électrique,
lequel rotor (1) présente un axe de rotor (2), plusieurs aimants permanents (3) agencés en la manière de rayons, ainsi que plusieurs noyaux de reflux (4),
dans lequel chaque aimant permanent (3) présente deux extrémités axiales, deux côtés longitudinaux (5), un côté radial extérieur (6) ainsi qu'un côté radial intérieur (7),
dans lequel entre deux aimants permanents (3) est respectivement agencé un noyau de reflux (4) intercalaire, sous la forme d'un coin, le coin présentant un plan de symétrie (8) s'étendant radialement, deux flancs (9), deux extrémités axiales et un côté radial extérieur (10), les deux flancs (9) formant entre eux un angle de coin A,
dans lequel les noyaux de reflux (4), en se référant à l'axe de rotor (2), dépassent radialement des aimants permanents (3),
lequel rotor (1) est entouré au moins partiellement par un enveloppe moulée (11), l'enveloppe moulée (11) présentant plusieurs nervures (12) s'étendant dans la direction axiale, et qui recouvrent radialement les aimants permanents (3),
dans lequel entre les nervures (12) et les noyaux de reflux (4) est réalisée une liaison par complémentarité de formes agissant dans la direction radiale,
et dans lequel les noyaux de reflux (4) ne surmontent pas les aimants permanents (3) au niveau de leur côté radial extérieur (6),
**caractérisé en ce que** concernant les noyaux de reflux (4), il s'agit de noyaux de reflux (4) individuels, non raccordés les uns aux autres, **en ce qu'**aussi bien les aimants permanents (3) que les noyaux de reflux (4) sont maintenus regroupés dans la direction radiale, principalement de manière directe par l'enveloppe moulée (11), et **en ce que** pour la liaison par complémentarité de formes entre les nervures (12) et les noyaux de reflux (4), il est prévu dans les flancs (9) des noyaux de reflux (4), respectivement une rainure (15) s'étendant axialement, la rainure (15) présentant un premier flanc de rainure (16), qui est situé plus près du côté radial extérieur (10) du noyau de reflux (4), ainsi qu'un deuxième flanc de rainure (17), qui est plus éloigné du côté radial extérieur (10) du noyau de reflux (4) .

2. Rotor (1) selon la revendication 1, **caractérisé en ce que** le premier flanc de rainure (16) forme par rapport au plan de symétrie (8) du noyau de reflux (4), un angle B, qui est plus grand que la moitié de l'angle de coin A et correspond au maximum à l'angle de coin A.

3. Rotor (1) selon la revendication 2, **caractérisé en ce que** l'angle B est plus grand d'au moins 4° que la moitié de l'angle de coin A.

4. Rotor (1) selon l'une des revendications 1 à 3,
**caractérisé en ce que** la rainure (15) se trouve environ dans une position radiale située du côté radial extérieur (6) des aimants permanents (3).

5. Rotor (1) selon l'une des revendications 1 à 4,
**caractérisé en ce que** le premier flanc de rainure (16) se raccorde sans discontinuité à un arrondi entre le flanc (9) correspondant et le côté radial extérieur (10) du noyau de reflux (4).

6. Rotor (1) selon l'une des revendications 1 à 5,
**caractérisé en ce qu'**entre le premier flanc de rainure (16) et le côté radial extérieur (10) du noyau de reflux (4), le contour des flancs (9) du noyau de reflux (4) est éloigné du plan de symétrie (8) au maximum d'une valeur correspondant environ à celle directement au niveau du raccordement au deuxième flanc de rainure (17) .

7. Rotor (1) selon l'une des revendications 1 à 6,
**caractérisé en ce que** l'enveloppe moulée (11) soutient également les aimants permanents (3) et les noyaux de reflux (4) radialement vers l'intérieur, une partie intérieure (18) de l'enveloppe moulée (11) étant reliée à une partie extérieure de l'enveloppe moulée (11), au moins au niveau d'une extrémité axiale (13, 14) du rotor (1) .

8. Rotor (1) selon l'une des revendications 1 à 7,
**caractérisé en ce que** les flancs (9) des noyaux de reflux (4) sont collés sur le côté longitudinal (5) respectivement adjacent des aimants permanents (3) voisins.

9. Rotor (1) selon l'une des revendications précédentes, **caractérisé en ce que** les noyaux de reflux (4) sont des empilements de tôles en matériau magnétique doux, constitués de plusieurs segments de tôle empilés les uns sur les autres.

10. Rotor (1) selon la revendication 9, **caractérisé en ce que** les segments de tôle sont découpés à la presse dans une tôle.

11. Rotor (1) selon la revendication 9 ou la revendication 10, **caractérisé en ce que** les segments de tôle sont isolés des deux côtés et sont de préférence reliés mécaniquement les uns aux autres, soudés par laser ou collés les uns aux autres.

12. Rotor (1) selon l'une des revendications précédentes, **caractérisé en ce que** les aimants permanents (3) sont des aimants néodyme-fer-bore.

13. Moteur électrique de petite taille comprenant un stator et un rotor (1) selon l'une des revendications précédentes, le moteur électrique de petite taille présentant de préférence un diamètre d'au maximum 45 mm, et de manière plus particulièrement préférée d'au maximum 22 mm.

14. Moteur électrique selon la revendication 13,
**caractérisé en ce que** le rotor (1) comporte 10, 14 ou 16 pôles de rotor, le stator comportant 12 dents de stator.
